# EUROPEAN PATENT APPLICATION

(11) **EP 0 988 953 A2**
(43) Date of publication of application: **29.03.2000**
(21) Application number: 99117633.0
(22) Date of filing: 07.09.1999
(51) Int. Cl.: B29C 44/58

(54) **Apparatus for fabricating foamed plastic panels**

(30) Priority: 25.09.1998 IT SV980051
(71) Applicant: Benetti Impianti S.r.l., 54033 Carrara (MS) (IT)
(72) Inventor: Benetti, Enrico, 54033 Carrara (MS) (IT)
(74) Representative: Karaghiosoff, Giorgio Alessandro, Dipl.-Phys.

(57) **Abstract**

The invention relates to an apparatus for fabricating foamed plastic panels, comprising at least two molding plates (1), which can be moved reciprocally and parallel to each other, to at least one approach position and at least one spaced position, said molding plates (1) being provided in combination with heating and/or cooling means. According to the present invention, precision means (13) are provided for moving at least one plate (1) relative to the other, and electronic means (20) are provided for controlling the distance between the plates (1). According to an important improvement of the invention, the molding plates (1) are supported by mounts or supporting means (3, 3A, 3B) which have, at least partly, two degrees of freedom in two different directions in the plane subtended by the plates (1) or in the plane parallel thereto. According to a further important improvement, means (21) for parting the thermoformed panel from one or both molding plates (1) are provided, which can be operated when discharging the piece and stopped when loading and molding the piece.

## Description

The invention relates to an apparatus for fabricating foamed plastic panels, comprising at least two molding plates, which can be moved reciprocally and parallel to each other, to at least one approach position and at least one spaced position, said molding plates being provided in combination with heating and/or cooling means.

Such apparati are used for industrial fabrication of panels from various materials, e.g. thermoformable plastic materials.

These panels can be usefully and frequently used, for instance, in building works, for purposes such as thermal insulation, inner and/or outer surface finishing, partition manufacture, or the like.

The invention has to object to provide, by simple and relatively inexpensive arrangements, an apparatus as described hereinbefore, allowing to:
move the molding plate/s, in the different panel fabrication steps, in a precise, smooth and accurately calibratable way, so as to prevent, for example, the thermoformable material from being excessively restrained in its expansion and/or the plates from being excessively spaced, which may cause panel defects; have a precise control on the parallelism of the plates, avoiding undesired thickness variations in the individual panels; obtaining panels having constant dimensional characteristics, or anyway within the range of commercial tolerances; avoid the undesired effects caused by abnormal expansion and/or shrinkage of the molding plates, due to heating and/or cooling thereof, in the processing steps: these dimensional changes might cause, for instance, the panel to be defected due to arching of the molding plate/s and/or the means for supporting these plates to be damaged or even broken; fabricate even very large panels, obviating the limits of prior art apparati; obtain a fast and effective separation of the thermoformed panel from one or both plates, while avoiding any possible damage thereof.

The invention fulfils the above objects by providing an apparatus ad described hereibefore, in which precision means are provided for moving at least one plate relative to the other, and electronic means are provided for controlling the distance between the plates.

According to an advantageous improvement, the molding plates are supported by mounts or supporting means which have, at least partly, two degrees of freedom in two different directions in the plane subtended by the plates or in the plane parallel thereto. Particularly, these mounts or supporting means may have, at least partly, degrees of freedom in two orthogonal directions in a plane parallel to the one subtended by the plates.

According to a further advantageous improvement, means for parting the thermoformed panel from one or both molding plates are provided, which can be operated when discharging the piece and stopped when loading and molding the piece.

The parting means may consist of at least one parting member, which is guided along the plate/s on the contact surface/s between the panel and the surface/s of the plate/s, and brought to the previous rest position or to another one.

Thanks to the above arrangements, an apparatus for fabricating foamed plastic panels can be provided, allowing to:
move the molding plate/s, in the different panel fabrication steps, in a precise, smooth and accurately calibratable way, so as to prevent, for example, the thermoformable material from being flattened and/or the plates from being excessively spaced, which may cause panel defects; have a precise control on the parallelism of the plates, avoiding undesired thickness variations in the individual panels; obtaining panels having constant dimensional characteristics, or anyway within the range of commercial tolerances; avoid the undesired effects caused by abnormal expansion and/or shrinkage of the molding plates, due to heating and/or cooling thereof, in the processing steps, such as panel defects due to arching of the molding plate/s and/or damaged or even broken plate supporting means; fabricate even very large panels, obviating the limits of prior art apparati; obtain a fast and effective separation of the thermoformed panel from one or both plates, while avoiding any possible damage thereof.

Further characteristics and improvements of the invention will form the subject of the dependent claims.

The characteristics of the invention and the advantages derived therefrom will appear more clearly from the following description of the annexed figures, in which:
Fig. 1 is a diagrammatic view of the operation principle of the apparatus according to the invention, with particular reference to the plate area.

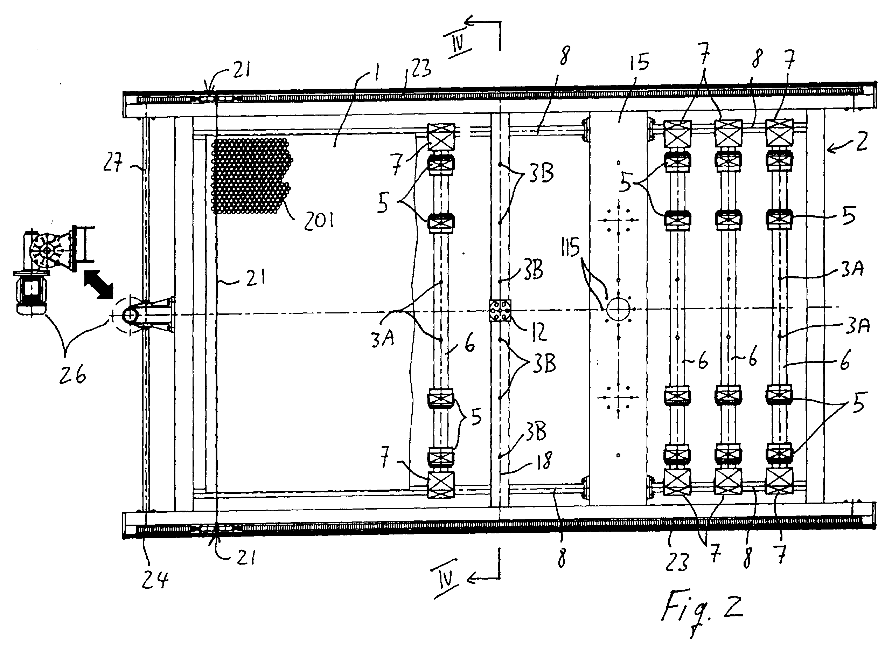

Fig. 2 is a top plan view of a plate-carrying frame of the apparatus according to the invention, with the plate partly in section.

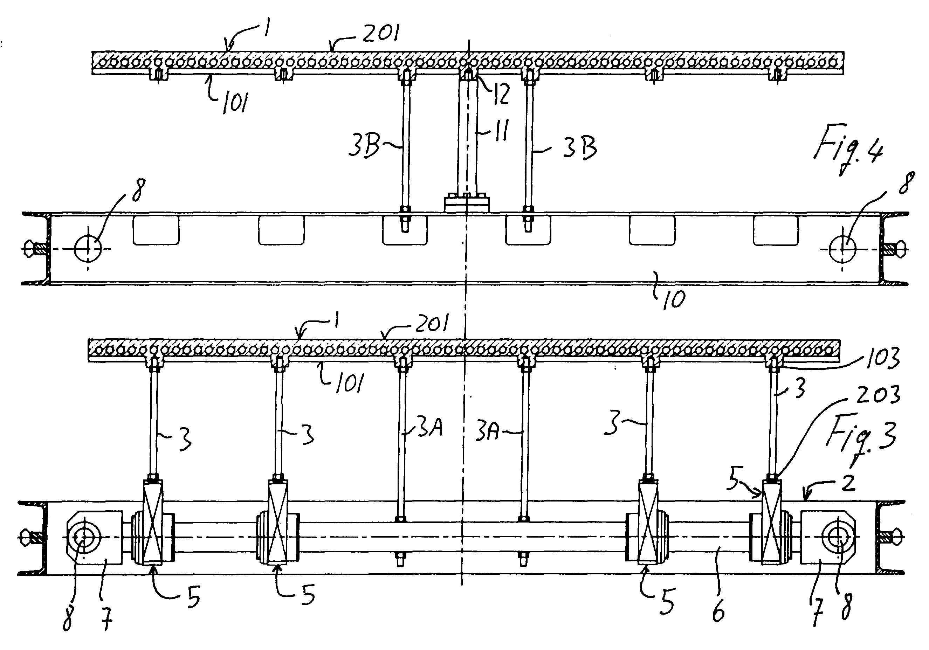

Fig. 3 is a partially vertically sectional, side view of a detail of the means for supporting a molding plate.

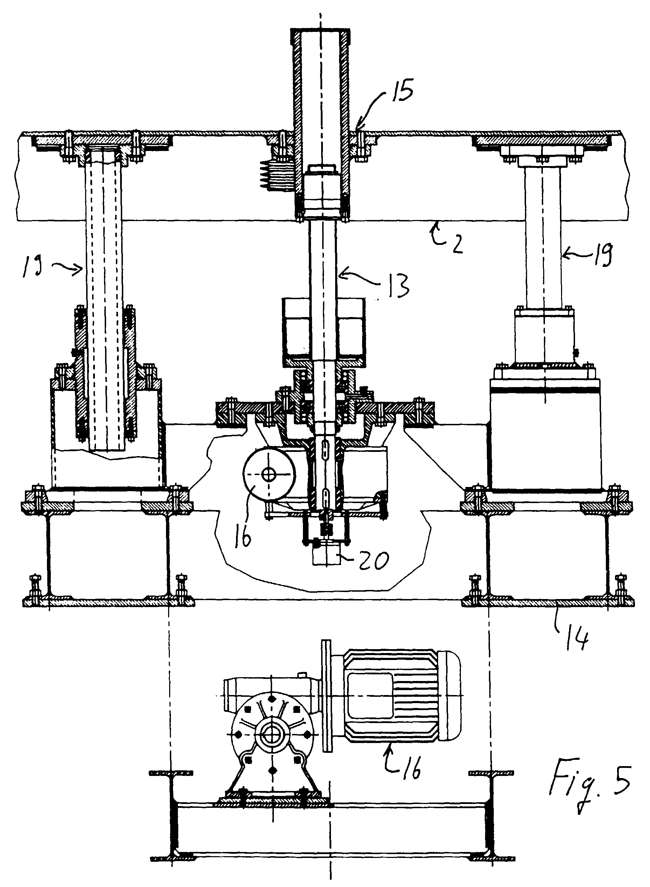

Fig. 4 is a sectional view of a further detail of the means for supporting a molding plate, and of the means for positioning and centering each plate, as taken along line IV-IV of fig. 2.
Fig. 5 is a partially vertically sectional view of a part of the means for moving and guiding a movable plate to its utmost extended position.

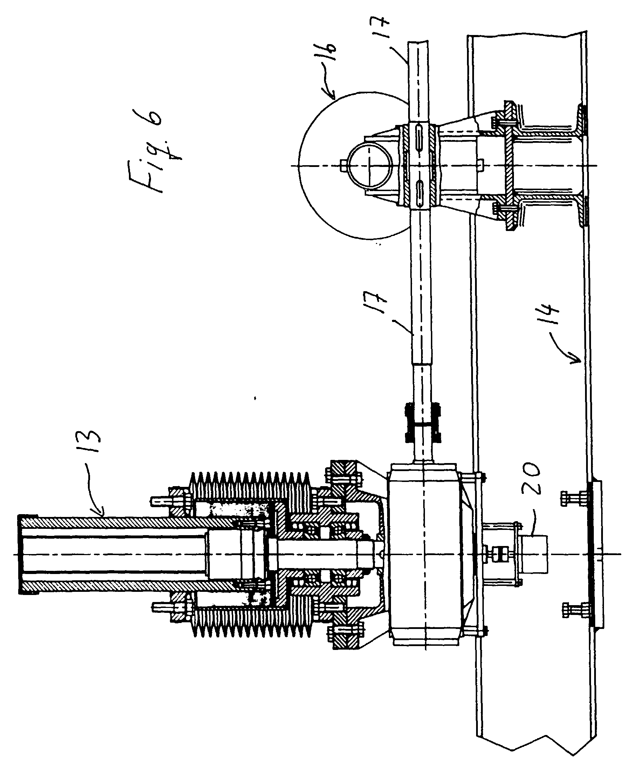

Fig. 6 is a partially vertically sectional view of a part of the means for moving a movable plate to its utmost retracted position.

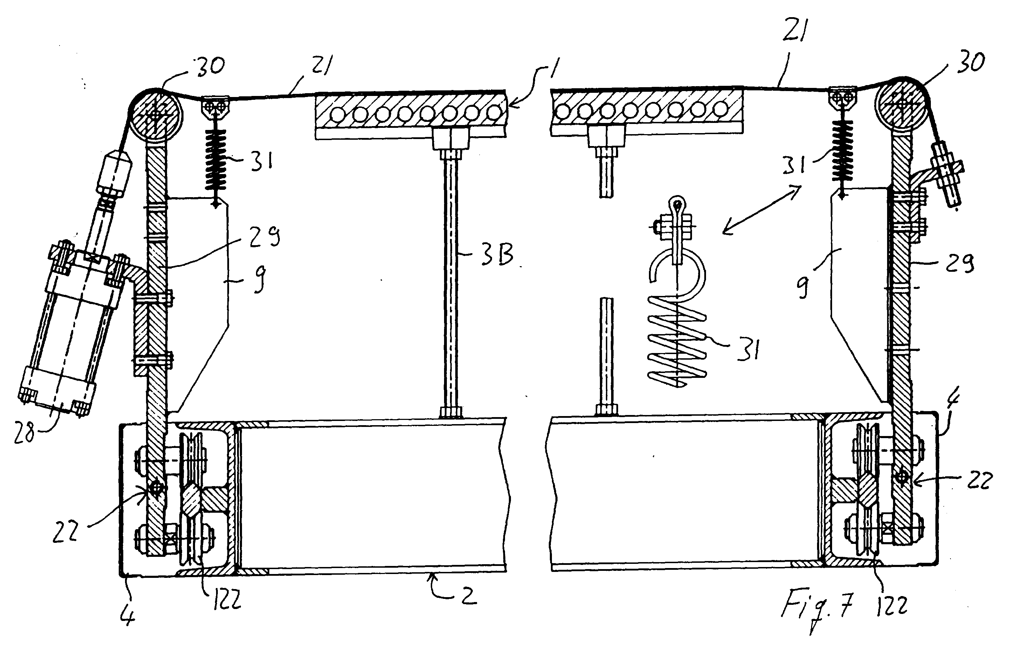

Fig. 7 is a side sectional view of a plate and of the associated means for supporting it and for parting the panel therefrom.

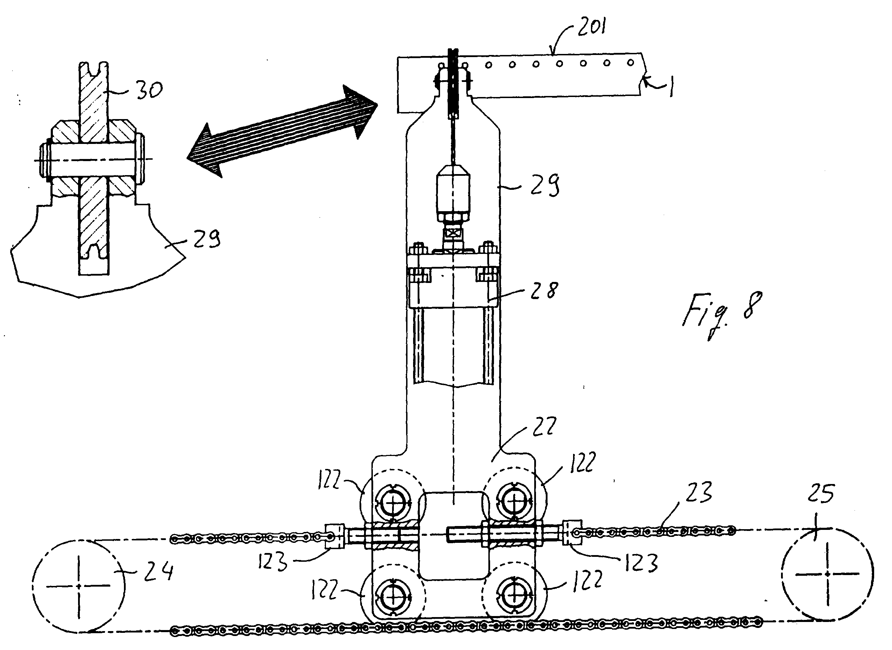

Fig. 8 is a view of a detail of the dragging means and of the tightening means associated to the means for parting the panel from the plate/s.

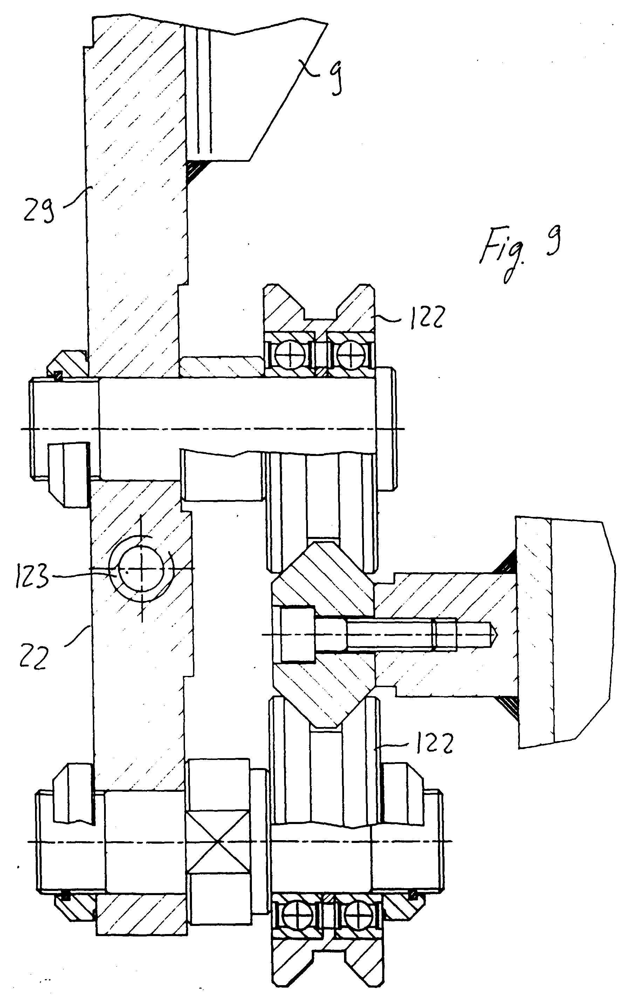

Fig. 9 shows a detail of fig. 7, wherein the element which drags the means for parting the panel from the plate/s is shown.

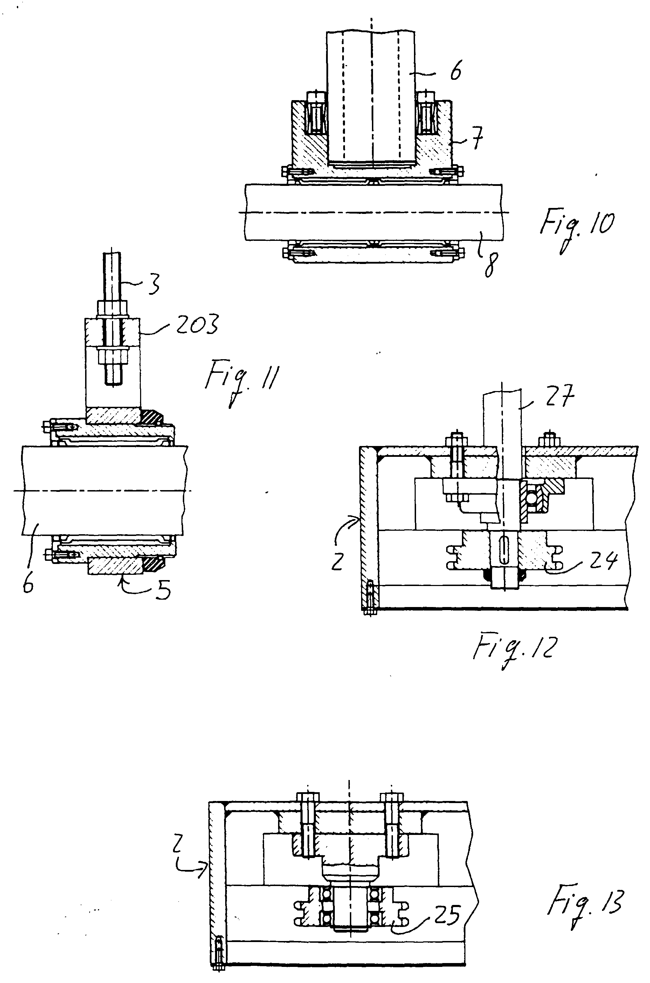

Figs. 10 and 11 are sectional views of the magnified details showing the sliding blocks whereby the ends of the rods fastened to the plate-carrying frame slide, and more precisely the one fastened to the slidable crosspieces of the frame and the one slidably fastened onto the crosspieces, whereto the corresponding rod is connected.
Figs. 12 and 13 are sectional views of the magnified details of two ends of the longitudinal members of the plate-carrying frame, whereon the loose return pulley and the motor-driven pulley respectively are rotatably supported.

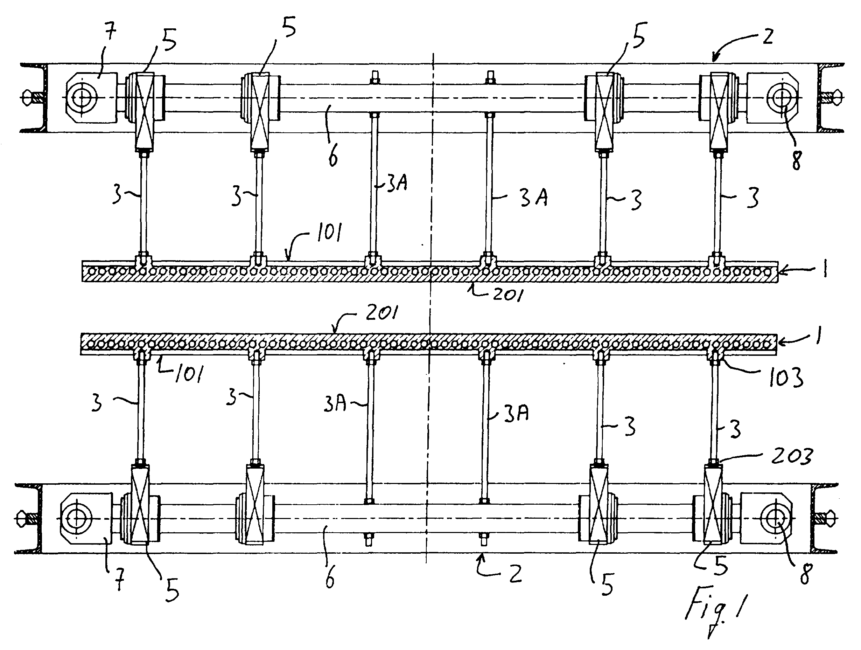

With reference to fig. 1, an apparatus according to the invention comprises two panel-molding parallel plates 1. These plates 1 have a preferably rectangular molding surface, but may be made in any other shape, depending on the desired final shape of the panel. These plates 1 are combined with appropriate means (non shown) for heating and/or cooling them, which can be operated/stopped depending on the type of processing operation to be performed.

At least one of these plates 1 can be moved relative to the other. During a first step, the plates 1 are approached, to an extent corresponding to a first predetermined thickness of the panel in the unexpanded condition. This material may be, for example, a semimanufactured sheet or plate, made of a thermoformable material or similar, placed between the plates. Subsequently, the plates 1 are spaced parallel to each other, until reaching a second predetermined thickness, in accordance with the extension of the thermoformable material. This second position corresponds to the final thickness of the panel. Now, the panel is mechanically parted from one or both plates, is discharged from the apparatus and the above described cycle can start again.

The expansion and parting steps coincide with the steps in which the plates 1 are heated and cooled.

Referring to the figures, in accordance with a first characteristic of the invention, the apparatus includes a plate-carrying frame 2. This frame 2 has the function to support and/or push the plates 1. Particularly, the pushing function is exerted only on the movable plate/s 1.

Each plate 1 is supported by rods 3 or columns for connecting the plate 1 to the plate-carrying frame 2, whose length is such that the plate 1 and the frame 2 are parallel.

These rods 3 are homogeneously arranged in the extension of the plates 1, preferably at the crossing points of a hypothetical grid composed of equally spaced segments.

Anyway, the number and arrangement of rods 3 may vary, depending, for instance, on the size of the plate 1, but in any case they will be such as to ensure a support and/or homogeneous pushing action on the whole plate 1.

Each rod 3 is stably fastened, by one of its ends 103, to the face 101 of the plate 1 which is turned towards the plate-carrying frame 2, and opposite to the panel molding face 201. At the other end 203, each support rod 3 is movably fastened to the plate-carrying frame 2, by a preferably annular slide 5, slidably engaged in a guide crosspiece 6, also preferably cylindrical, which is one of the transverse cylindrical members 6 forming the plate-carrying frame 2. This annular slide 5 is preferably of the ball type. This arrangement ensures a considerable reduction of sliding frictions, as compared with known arrangements, thereby providing particularly smooth and accurate movements for each movable rod 3 on the crosspiece 6 associated thereto. Each guide crosspiece 6 for the movable rods 3 has, at its two ends, annular, preferably cylindrical, sliding blocks 7, slidably engaged on guide longitudinal members 8, also preferably cylindrical, which form two stationary longitudinal members of the plate-carrying frame 2. The annular sliding blocks 6 are also preferably of the ball type, to ensure a particularly smooth, accurate and as friction-free as possible, of each crosspiece 6 on the longitudinal members 8.

The annular slides 5, sliding on the crosspieces 6 provide the rods 3 with a degree of freedom in the transverse direction, with respect to the direction of the frame 2, whereas the annular sliding blocks 7 of the crosspieces 6 sliding on the longitudinal members 8 provides the crosspieces 6 and hence the rods 3 with a further degree of freedom on the longitudinal extension, with reference to the extension of the frame 2. Thanks to the above arrangements, the rods 3 have a certain freedom of motion in any direction, in the plane coinciding with the extension of the plate-carrying frame 2.

The rods 3A situated in the area of the median longitudinal axis of the plate 1 are stably fastened both to the plate 1 and to the movable crosspieces 6. Hence, these rods 3A only have one degree of freedom of motion, particularly in the longitudinal direction, with respect to the extension of the plate 1 and of the plate-carrying frame 2.

The rods 3B situated in the area of the median longitudinal axis of the plate 1 are stably fastened both to the plate 1 and to a movable crosspiece 10 which forms a stationary central cross member of the plate-carrying frame 2.

Thanks to the above support system for the plates 1, the plates 1 are fastened to the plate-carrying frame 2 in an at least partially non stationary way, according to the various degrees of freedom described above. Hence, all drawbacks accompanying stable fastening, and involved by expansion and shrinkage of the plates 1, due to thermal changes occurring in the different processing steps, are obviated. The freedom of motion of the rods 3, 3A, 3B is proportional to the extent of expansion/shrinkage occurring in the different areas of the plate 1. Panel defects caused, for instance, by arching of one or both plates 1 are obviated, while preserving the structural integrity of the means for supporting the plates 1, particularly of the rods 3, 3A, 3B, which, having the above degrees of freedom, are not subject to lateral stresses and consequent deformations which might cause them to get damaged or broken.

The apparatus also provides means 11 for simultaneously positioning and/or centering each molding plate 1 with respect to its plate-carrying frame 2, and to the other molding plate 1.

These means preferably consist of a substantially rigid rod 11 or column fixed at the geometrical center of the plate-carrying frame 2 and extending towards the molding plate 1. This rod 11 has removable joints or clutches for engagement in a complementary joint housing 12, formed at the geometrical center of the face 101 of the plate 1 opposite to the one in contact with the thermoformable material. By centering the plates 1, these can be prevented from being misaligned, reciprocally and/or with their respective plate-carrying frames 2, not only during assembly but also upon expansion and shrinkage of the plates 1.

This arrangement provides the advantage of a considerable construction simplicity and practicality and speed during assembly.

According to another important characteristic of the invention, the plate/s 1 are preferably moved by means of linear actuators 13. In the example as shown, two of such actuators are provided for each movable plate 1, but their number and/or size and/or position may vary, depending, for instance, on the size of the plates 1. Each of these linear actuators 13 is fastened by one of its ends, to the frame 14 supporting the whole apparatus and by the opposite end to intermediate locations 115 of two crosspieces 15, which are symmetrical to the median transverse axis 18 of the plates, in an intermediate area of each half plate 1, with reference to said axis of symmetry 18. These crosspieces 15 are two stationary cross members of the plate-carrying frame 2. The actuators 13 are preferably of the ball type. This arrangement provides a considerable friction reduction as compared with other known arrangements, thereby ensuring a particularly smooth, constant and especially accurate motion of the plate/s 1.

The actuators 13 are driven by a common, preferably electric motor 16. This motor 16 is located in a substantially central position of the apparatus supporting frame 14, and intermediate between the two actuators 13, and is dynamically connected to the two actuators 13, through one common drive shaft 17, acting on both actuators 13. The motor 16 may include a reduction gear.

In combination with each linear actuator 13, there are provided two guides 19 for stabilizing the movements of the movable plate 1 whereto they are associated. Hence, in the embodiment as shown in the figures, four of these guides 19 are provided for each movable plate 1, placed approximately at the four corners of the plate 1. Their number, location, and dimensional characteristics may vary depending, for instance, on the plate size. Each of these guides 19 is fastened, by one of its ends, to the apparatus supporting frame 14, and by the other end, to the crosspiece 15 whereon the actuators 13 operate, on the side opposite to each actuator.

Each stabilization guide preferably consists of a passive linear actuator 19, which has the function to assure the stability of the plate/s 1 and a perfect parallelism therebetween in the different processing steps.

The combined actions of the ball actuators 13 and of the guides 19 allows the plates to move in a highly accurate and smooth manner, which is an essential characteristic in thermoformed plastic panel manufacturing. Further, it ensures that the fabricated panels have a constant thickness within each individual panel and from panel to panel.

At least one of the linear actuators 13 is combined with means 20 for measuring the stroke of the actuator 13 whereto they are associated, which corresponds to the stroke of the plates 1. These means consist, for instance, of an encoder 20, preferably placed at the lower end of at least one of the linear actuators 13. The function of the encoder 20 is to measure, with the highest accuracy, the stroke of each linear actuator 13, corresponding to the stroke run by the plate/s. This measurement may be done, for instance, by counting the number of revolutions or fractions of revolutions run by each actuator 13. The accuracy of this measurement is essential for fabricating panels having a constant thickness.

The output of each encoder 20 is connected to a unit for control and command of the motor 16 and of the actuators 13. Each encoder 20 transmits a succession of pulses to the central unit according to the stroke that has been run. In the control unit, software is loaded for controlling the processing steps. Depending on the pulses it receives, the central unit controls the relative motion of the plates, by controlling the motor.

For example, in a first step, the central unit instructs the motor 16 to run the number of revolutions required to move at a predetermined speed the plate 1 from a first thickness to a second thickness of the panel. Once the panel has been molded and removed, the central unit transmits an invert-motion command to the motor 16, so that the plates 1 can be brought back to the previous thickness distance.

The software loaded in the central unit may be varied and replaced at will, depending on the processing needs.

According to a further important characteristic of the invention, means 21 are provided for parting the thermoformed panel from one or both molding plates 1. These means may be operated when discharging the thermoformed piece, and stopped when loading the thermoformable piece to be molded.

These means may consist of at least one parting member 21, which is guided along the plate/s 1 on the contact surface/s between the panel and the surface/s 201 of the plate/s, and brought to the previous rest position or to another one.

In the example as shown in the figures, this parting member consists of a wire 21 or rope, preferably made of metal, extending transverse and parallel to the transverse extension of the plate/s 1. Alternatively, this wire 21 may extend, for instance, longitudinally and parallel to the longitudinal extension of the plate/s 1.

This wire 21 is guided at its ends by dragging means, which are driven in a synchronized manner.

These dragging means consist of a pair of carriages 22, which are mounted so as to be able to slide along the two opposite peripheral longitudinal sides of the plate-carrying frame 2. Each of them is slidably engaged in a guide 4 associated to the plate-carrying frame 2, particularly each carriage 22 has two pairs of grooved wheels 122, engaging a guide 4 which has a corresponding section.

Each dragging carriage 22 is driven by a continuous, preferably toothed belt 23, situated in the area of the sliding guide 4 for the carriage 22, and returned about two pulleys, one of which 24 is motor-driven, and the other 25 is passive. The pulleys 24, 25 are disposed at the ends of each peripheral longitudinal side of the plate-carrying frame 2, along which side the carriage 22 slides. Particularly, the two motor-driven pulleys 24 are placed at the same end of said guides 4.

The two motor-driven pulleys 24 are driven by a common motor 26. This motor 26 is preferably located substantially at the center of the peripheral transverse side at whose ends the two driving pulleys 24 are provided, and is dynamically connected to said pulleys 24 by a drive shaft 27, shared by both pulleys. The construction arrangement providing one single motor 26 and one single drive motor 27, synchronizes the rotation of pulleys 24 and hence the motion of carriages 22, thereby ensuring that the parting wire 21 is always parallel to the two transverse sides of the plate 1. By sliding between the surface of the plate 201 and that of the panel, this wire 21 parts the panel therefrom, at the end of the molding step.

Tightening means 28, fastened onto each carriage 22, are associated to the parting wire 21. In the embodiment as shown in the figures, these means consist of an adjustable linear actuator 28, which acts on one end of the wire 21, the opposite end of the wire 21 being mounted in a stationary way.

Means 30 are also provided for supporting the wire 21, such as to keep the wire 21 at a slightly higher level than the surface 201 of the plate 1, and return means 31, bringing it against the molding plate 1 or at a tangent level therewith.

These wire supporting means consist of a pair of pulleys 30, each provided at the end of an upright 29, placed on each of the opposite carriages 22. Thanks to these pulleys 30, the wire 21 is returned on one side to the appropriate fastening means and on the other side to the linear actuator 28 acting as a wire-tightener.

The return means consist of a pair of springs 31 acting between the wire 21 and an extension 9 of the upright 29 of each carriage 22. These springs 31 are mounted on opposite sides, at the end portions of the wire 21, out of the molding plate 1. In the embodiment as shown in the figures, these springs 31 exert their action with a predetermined non-calibratable force, but elastic means may be provided whose tension may be adjusted, e.g. by controlling the point whereat they are fastened to the extension 9 of the upright 29.

The wire-tightening actuating cylinder 28, the return pulleys 30 for the wire 21 and the springs 31 for lowering the wire 21 are mounted on two uprights 29 associated to each carriage 22, which extend towards the molding plate 1, and at the same level as the latter.

Thanks to all of the above arrangements, when the molding process is over, the panel may be very easily parted from one or both plates 1, without damaging the surface/s of the panel. At the end of its stroke, the wire 21 will stay in its end position, before starting a new parting operation, this time in the opposite direction. Alternatively, an immediate return of the wire 21 to its previous starting position may be provided, the motion for separating the panel being provided only in one direction.

Electronic means for detecting the wire position may be provided, whereby the control and command central unit as described hereinbefore can also coordinate panel separation operations.

In accordance with an advantageous improvement, an automatic system for loading the thermoformable material and for discharging the thermoformed panel may be provided. There may be provided, for instance, a robot composed of a carriage mounted on predetermined guides and having a computer-controlled arm having the function, during a first step, to insert the semimanufactured material, e.g. a sheet or plate made of plastic or the like, between the plates. At the end of the process, the arm discharges the formed panel. This automatic system may be controlled by and synchronized with the operation of one or more panel fabricating apparati, appropriately arranged along the path of the movable carriage with the computer-controlled arm.

By this arrangement, a considerable automation degree can be provided in all piece processing steps.

It shall be clear that one or more of the invention characteristics as described and claimed herein may be provided in combination or individually on one or both molding plates 1.

Obviously, the invention is not intended to be limited to the embodiment described and shown herein, but may be greatly varied, especially as regards construction, without departure from the guiding principles disclosed above and claimed below.

## Claims

**1.** An apparatus for fabricating foamed plastic panels, comprising at least two forming plates (1), which can be moved reciprocally and parallel to each other, to at least one approach position and at least one spaced position, said forming plates (1) being provided in combination with heating and/or cooling means, characterized in that precision means (13) are provided for moving at least one plate (1) relative to the other, and electronic means (20) are provided for controlling the distance between the plates (1).

**2.** An apparatus as claimed in claim 1, characterized in that the means for moving the plate/s (1) consist of at least one ballscrew-operated linear actuator (13) for at least one and/or for each movable plate (1).

**3.** An apparatus as claimed in claims 1 and 2, characterized in that it comprises two ballscrew-operated linear actuators (12), acting on at least one and/or on each movable plate (1), fastened by their lower ends to a frame (14) supporting the whole apparatus and by the upper ends to another frame (2) for pressing and/or supporting the molding plates (1).

**4.** An apparatus as claimed in one or more of the preceding claims, characterized in that the actuators (13) are driven by a common, preferably electric motor (16), dynamically connected to the two actuators (13).

**5.** An apparatus as claimed in one or more of the preceding claims, characterized in that the motor (16) transmits motion to the linear actuators (13) through a drive shaft (17) acting on both actuators (13).

**6.** An apparatus as claimed in one or more of the preceding claims, characterized in that at least one of the linear actuators (13) is combined with means (20) for measuring the stroke of the actuators (13), a unit being provided for control and command of the motor/s (16) and/or of the actuators (13), which is connected to the outputs of the stroke measuring means (20) or whereto the latter transmit pulses related to the run stroke, whereas in the control and command unit software is loaded for controlling the relative motion of the plate/s (1).

**7.** An apparatus as claimed in one or more of the preceding claims, characterized in that the control and command unit can be programmed according to the different types of processing.

**8.** An apparatus as claimed in one or more of the preceding claims, characterized in that, in combination with at least one linear actuator (13), one or more stabilization guides (19) are provided, interposed between their respective plate (1) and the associated stationary support frame (14).

**9.** An apparatus as claimed in claim 7, characterized in that the stabilization guides (19) are placed approximately at the four corners.

**10.** An apparatus as claimed in one or more of the preceding claims, characterized in that the plate-carrying frame (2) comprises at least two intermediate cross members (15), disposed symmetrically to a median axis (18) of the plates (1), in an intermediate zone of each half plate (1), referring to this axis of symmetry (18).

**11.** An apparatus for fabricating foamed plastic panels, comprising at least two forming plates (1), which can be moved reciprocally and parallel to each other, to at least one approach position and at least one spaced position, said forming plates (1) being provided in combination with heating and/or cooling means, characterized in that the molding plates (1) are supported by mounts or supporting means (3, 3A, 3B) which have, at least partly, two degrees of freedom in two different directions in the plane subtended by the plates (1) or in the plane parallel thereto.

**12.** An apparatus as claimed in claim 11, characterized in that the means (3, 3A, 3B) for supporting the molding plates (1) have, at least partly, degrees of freedom in two orthogonal directions in a plane parallel to the one subtended by the plates (1).

**13.** An apparatus as claimed in claims 11 and 12, characterized in that the means for supporting the molding plates (1) consist of supporting rods (3, 3A, 3B), stably fastened by one of their ends (103) to a face (101) of the molding plates (1), opposite to the face (201) contacting the thermoformable material, and fastened by the opposite end (203), at least partially movably, to a plate-carrying frame (2).

**14.** An apparatus as claimed in claim 13, characterized in that each movable supporting rod (3) is fastened by the end (203) opposite to the one integral with the corresponding molding plate (1), to sliding means (5) engaged on a first guide (6) and movable in a first direction, whereas the first guide (6) is mounted on a second guide, in such a manner as to be able to slide in a second direction, different from the first one, particularly orthogonal thereto.

**15.** An apparatus as claimed in one or more of claims 11 to 14, characterized in that each movable supporting rod (3) is fastened, by the end opposite to the one integral with the molding plate (1), to an annular slide (5) preferably a ball slide, slidably engaged with a preferably cylindrical guide crosspiece (6), which is a part of the plate-carrying frame (2).

**16.** An apparatus as claimed in one or more of claims 11 to 15, characterized in that the guide crosspieces (6) have, at their two ends, annular sliding blocks (7) engaged on guide longitudinal members (8) of the plate-carrying frame (2).

**17.** An apparatus as claimed in claim 16, characterized in that the sliding blocks (7) are preferably of the ball type, and the guide longitudinal members (8), preferably cylindrical, form two stationary longitudinal members of the plate-carrying frame (2).

**18.** An apparatus as claimed in one or more of the preceding claims 11 to 17, characterized in that the plate-bearing rods (3, 3A, 3B) are homogeneously arranged in the extension of the plates (1).

**19.** An apparatus as claimed in one or more of the preceding claims 11 to 18, characterized in that the plate-bearing rods (3A, 3B) substantially coinciding with at least one of the median axes of the plates (1) are fastened to the plate-carrying frame (2) in a stationary manner.

**20.** An apparatus as claimed in claim 19, characterized in that the plate-bearing rods (3A, 3B) oriented in the two perpendicular median axes of the plate (1) are fastened to the plate-carrying frame (2) in a stationary manner.

**21.** An apparatus as claimed in claims 11 to 20, characterized in that the plate (1) has a longer side and a shorter side, the plate-bearing rods (3B) close, on one or both sides to the median axis (18) parallel to the shorter side of the plate (1), being fastened to the plate-carrying frame in a stationary manner.

**22.** An apparatus as claimed in one or more of the preceding claims 11 to 21, characterized in that the plate-bearing rods (3A) provided in the area of the median axis of the plate (1) parallel to the longer side thereof, are fastened to the plate-carrying frame (2) in such a manner as to be stationary in the direction parallel to the shorter side of the plate (1) and movable along the axis parallel to said longer side.

**23.** An apparatus as claimed in one or more of claims 11 to 22, characterized in that it comprises means (11, 12) for simultaneously positioning and/or centering each molding plate (1) with respect to its plate-carrying frame (2), and to the other molding plate (1).

**24.** An apparatus as claimed in claim 23, characterized in that the centering means consist of at least one rod (11) or column fastened at the geometrical center of the plate-carrying frame (2) and extending towards the molding plate (1), which rod (11) or column has removable joints or clutches for engagement in a complementary joint housing (12), formed at the geometrical center of the face (101) of the plate (1) opposite to the one in contact with the thermoformable material.

**25.** An apparatus for fabricating foamed plastic panels, comprising at least two forming plates (1), which can be moved reciprocally and parallel to each other, to at least one approach position and at least one spaced position, said forming plates (1) being provided in combination with heating and/or cooling means, characterized in that means (21) for parting the thermoformed panel from one or both molding plates (1) are provided, which can be operated when discharging the piece and stopped during the molding operation.

**26.** An apparatus as claimed in claim 25, characterized in that the parting means consist of at least one parting member (21), which is guided along the plate/s (1) on the contact surface/s between the panel and the surface/s (201) of the plate/s (1), and brought to the previous rest position or to another one.

**27.** An apparatus as claimed in claims 25 and 26, characterized in that the parting member consists of a wire (21) or rope, preferably made of metal, extending transversely or longitudinally and parallel to one of the two extensions of the plate (1) and being guided by dragging means (22) disposed at its ends, which dragging means (22) are driven in a synchronized manner.

**28.** An apparatus as claimed in one or more of claims 25 to 27, characterized in that the means for dragging the parting wire (21) consist of a pair of carriages (22), which are mounted so as to be able to slide along two opposite peripheral, particularly longitudinal sides of the platen-carrying frame (2).

**29.** An apparatus as claimed in one or more of claims 25 to 28, characterized in that each carriage (22) for dragging the parting wire (21) is driven by a continuous, preferably toothed belt, which is mounted on two pulleys (24, 25), one of which is motor-driven (24), and which pulleys (24, 25) are disposed at the two ends of each peripheral side of the plate-carrying frame (2), along which the carriages (22) move.

**30.** An apparatus as claimed in one or more of claims 25 to 29, characterized in that the two motor-driven pulleys (24) are driven by a common motor (26) preferably located substantially at the center of one of the two peripheral transverse sides of the plate-carrying frame (2), connected to the pulleys (24) by a common drive shaft (27).

**31.** An apparatus as claimed in one or more of claims 25 to 30, characterized in that tightening means (28), fastened onto each carriage (22), are associated to the parting wire (21).An apparatus as claimed in one or more of claims 25 to 31, characterized in that means are also provided for supporting the wire (21), such as pulleys (30) or the like, and such as to keep the wire (21) at a higher level than the surface (201) of the plate/s (1), while elastic or return means (31) for the wire (21) are provided, bringing it against the molding plate (1) or at a tangent level therewith.

**33.** An apparatus as claimed in one or more of claims 25 to 32, characterized in that the means for supporting the wire (21) consist of two pulleys (30), each mounted on an upright (29) of the opposite carriages (22), and whereby the wire (21) is deviated towards the tightening means (28), whereas the elastic means consist of respective springs (31) acting between the wire (21) and the carriage (22), at the end portions of the wire (21), out of the molding plate (1).

**34.** An apparatus as claimed in one or more of claims 25 to 33, characterized in that the dragging carriage (22) is slidably engaged in a guide associated to the plate-carrying frame (2), in the area where the driving belt (23) is also provided, and it extends upwards at the same level as the molding plate (1), by an extension (29) for supporting the return pulley (30) for the wire (21) and tightening means (28), as well as elastic means (31) for lowering the wire (21) to the level of the surface (201) of the molding plate (1).

**35.** An apparatus as claimed in one or more of claims 1 to 10, characterized in that it comprises, in combination therewith, the characteristics as claimed in one or more of claims 11 to 24.

**36.** An apparatus as claimed in one or more of claims 1 to 10, characterized in that it comprises, in combination therewith, the characteristics as claimed in one or more of claims 25 a to 34.

**37.** An apparatus as claimed in one or more of claims 11 to 24, characterized in that it comprises, in combination therewith, the characteristics as claimed in one or more of claims 25 to 34.

**38.** An apparatus as claimed in one or more of claims 1 to 10, and 35 to 37, characterized in that it comprises, in combination therewith, the characteristics as claimed in one or more of claims 25 a to 34.

**39.** An apparatus for fabricating foamed plastic panels, wholly or partly as described, shown and for the purposes disclosed herein.
